# EUROPÄISCHE PATENTSCHRIFT

(11) **EP 2 888 495 B1**
(45) Veröffentlichungstag und Bekanntmachung des Hinweises auf die Patenterteilung: **13.07.2016**
(21) Anmeldenummer: 13765628.6
(22) Anmeldetag: 14.08.2013
(51) Int. Cl.: F16D 23/14, F16D 25/08, F16D 25/12

(54) **KOLBEN-ZYLINDER-ANORDNUNG, INSBESONDERE EIN NEHMERZYLINDER FÜR EINE HYDRAULISCHE KUPPLUNGSBETÄTIGUNGSEINRICHTUNG**
PISTON-CYLINDER ARRANGEMENT, IN PARTICULAR A SLAVE CYLINDER FOR A HYDRAULIC CLUTCH ACTUATING DEVICE
ENSEMBLE PISTON-CYLINDRE, EN PARTICULIER CYLINDRE RÉCEPTEUR POUR DISPOSITIF D'ACTIONNEMENT D'EMBRAYAGE HYDRAULIQUE

(30) Priorität: 27.08.2012 DE 102012215182; 19.12.2012 DE 102012223735
(43) Veröffentlichungstag der Anmeldung: 01.07.2015
(73) Patentinhaber: Schaeffler Technologies AG & Co. KG, 91074 Herzogenaurach (DE)
(72) Erfinder: WELTER, Roland, 77815 Bühl (DE); HONSELMANN, Sebastian, 77886 Lauf (DE); SAKSCHEWSKI, Jan, 76437 Rastatt (DE); ORTMANN, Simon, 77866 Rheinau-Linx (DE)
(86) Internationale Anmeldenummer: PCT/DE2013/200123
(87) Internationale Veröffentlichungsnummer: WO 2014/032665

(56) Entgegenhaltungen:
- EP-A2- 0 345 451
- DE-A1- 19 635 101
- DE-A1-102008 004 027

## Beschreibung

Die Erfindung betrifft eine Kolben-Zylinder-Anordnung, insbesondere einen Nehmerzylinder für eine hydraulische Kupplungsbetätigungseinrichtung, mit einem Ausrücklager und umfassend ein aus einem Kunststoff bestehendes Zylindergehäuse, in welchem ein ringförmiger Druckraum ausgebildet ist, in dem ein Kolben axial beweglich zur Betätigung des Ausrücklagers gelagert ist, wobei die Innenwandung des Druckraumes eine Führungshülse bildet und wobei an der Führungshülse, dem Ausrücklager zugewandt, ein Anschlag angeordnet ist.

Es sind Zentralausrücker für eine hydraulische Kupplungsbetätigung, insbesondere für Doppelkupplungsgetriebe bekannt, bei welchen das Zylindergehäuse aus einem Kunststoff besteht. Eine Zylinderwandung des Zylindergehäuses begrenzt einen ringförmigen Druckraum radial nach außen, in dem ein mit der Kupplung wirkverbindbarer Ringkolben verschiebbar aufgenommen ist. Das Zylindergehäuse wird dabei aus zwei konzentrisch zueinander angeordneten Zylinderwandungen gebildet, wobei die innere Zylinderwandung die Begrenzung des Druckraumes bildet und als Führungshülse bezeichnet wird.

In Betriebszuständen des Nehmerzylinders, insbesondere am Grenzbereich der Kräfte und darüber hinaus, kann es passieren, dass das Ausrücklager dem Partner zur Kraftübertragung, vorzugsweise die Tellerfelder der Kupplung, verliert. Dabei muss sichergestellt werden, dass die Ausrückeinheit nicht über die angegebene maximale Extension herausfahren kann, was durch einen am Zylindergehäuse verankerten Anschlag gewährleistet wird. Kann dies nicht gewährleistet werden, zerstört sich der Nehmerzylinder selbst und verursacht Folgeschäden. Zusätzlich zu den hohen auftretenden Kräften im Nehmerzylinder während des Betriebes des Kupplungsbetätigungssystems kommt es zu einer Temperaturbelastung.

Ein Nehmerzylinder mit einem Anschlag zur Kolbenhubbegrenzung gemäß des Oberbegriffs des Patentanspruchs 1 ist aus der DE 10 2008 004 027 A1 bekannt.

Es ist bekannt, als Transportanschlag für einen Nehmerzylinder der Kupplungsbetätigungseinrichtung einen Blechring zu verwenden. Der Schaft dieses Blechringes wird in einem Hinterschnitt im Zylindergehäuse gebördelt. Ein solcher Blechring fungiert lediglich als Transportsicherung und ist auf die Belastungen ausgelegt, die während des Transports vom Hersteller der Kupplungsbetätigungseinrichtung zum Empfänger entstehen und verhindert ein Zerlegen des Nehmerzylinders während des Transports.

Der Erfindung liegt somit die Aufgabe zugrunde, eine einfach und kostengünstig herstellbare Kolben-Zylinder-Anordnung anzugeben, welche einen Anschlag für den Kolben aufweist, der sowohl den im Betrieb der Kupplungsbetätigungseinrichtung auftretenden Drücken als auch den Temperaturbelastungen Stand hält.

Erfindungsgemäß ist die Aufgabe dadurch gelöst, dass der Anschlag als Schraubverbindung ausgebildet ist. Somit ist ein Anschlag gegeben, welcher unter Betriebsbedingungen verhindert, dass der Kolben über die maximal zulässige Extension hinausfahren kann, wodurch eine Zerstörung des Systems zuverlässig verhindert wird.

Vorteilhafterweise besteht die Schraubverbindung aus einem an der Führungshülse ausgebildeten Gewinde, auf welches eine Anschlagmutter aufgeschraubt ist. Ein solcher Anschlag ist einfach bei der Montage des Nehmerzylinders zu realisieren, wobei die Anschlagmutter als eigentlicher Anschlag für den Kolben vorgesehen ist. Im Falle eines Missbrauchs wird nun der Kolben beim Überschreiten der maximalen Extension mit der Anschlagmutter in Kontakt kommen, wodurch das Austreten von Hydraulikflüssigkeit verhindert wird, da ein Überfahren der Außenwandung des Zylindergehäuses durch den Kolben mit Hilfe des Anschlages zuverlässig unterbunden wird, weshalb der Druckraum immer abgedichtet ist.

In einer Ausgestaltung ist zwischen der Anschlagmutter und dem Gewinde ein Schraubenkleber aufgebracht. Durch die Verwendung dieses Schraubenklebers wird die Anschlagmutter gleichzeitig als Transportsicherung genutzt und verhindert ein Zerlegen des Nehmerzylinders beim Transport vom Hersteller der Kupplungsbetätigungseinrichtung zum Empfänger.

Alternativ ist die Anschlagmütter durch ein Heißverstemmen bzw. ein Laserschweißen oder durch einen Formschluss mit einem elastischen Element an der Führungshülse gesichert. Auch durch diese Befestigungsmethoden wird verhindert, dass die Anschlagmutter sich verdreht, wodurch ein sich Lösen der Anschlagmutter durch im Kraftfahrzeug auftretende Vibrationen zuverlässig unterbunden werden.

In einer Variante ist das Gewinde an einer zum Kolben hinweisenden Seite der Führungshülse ausgebildet. Dabei dient das Gewinde als Außengewinde für die Anschlagmutter.

In einer Ausgestaltung weist der Kolben auf einer der Führungshülse zugewandten Seite einen Freischnitt auf, in welchen bei maximaler Extension des Kolbens die Anschlagmutter eingreift. Diese Ausgestaltung führt zu einer platzsparenden Ausführung des Nehmerzylinders, welcher zuverlässig vor einer maximalen Extension geschützt ist.

In einer weiteren Ausführungsform ist das Gewinde an einer vom Kolben weg weisenden Seite der Führungshülse ausgebildet. Das Gewinde ist somit als Innengewinde ausgebildet, in welches die Anschlagmutter eingeschraubt wird. Bei einer solchen platzsparenden Variante wird der Überstand der Anschlagmutter, welcher die Führungshülse umgreift, gleichzeitig als Anschlag für den Kolben bei maximaler Extension genutzt.

In einer Weiterbildung steigen Flanken des Gewindes in Kraftrichtung flach an. Durch diese konstruktive Maßnahme wird die vom Kolben eingeleitete Axialkraft gut in die Schraubverbindung eingeleitet, wodurch ein Abscheren der Gewindegänge vermieden und die Grifffestigkeit der Schraubverbindung erhöht wird.

Vorteilhafterweise sind die Anschlagmutter und das Gewinde aus einem Kunststoff gefertigt oder die Anschlagmutter besteht aus einem Metall. Die Herstellung der Anschlagmutter und der, das Gewinde tragenden Führungshülse ist in verschiedenen Werkstoffpaarungen denkbar. Insbesondere, wenn die Führungshülse aus einem Kunststoff ausgebildet ist, kann dieses einstückig während der Ausbildung des Zylindergehäuses mit diesem hergestellt werden. Dadurch werden Herstellungsschritte reduziert und der Kostenaufwand verringert.

Die Erfindung lässt zahlreiche Ausführungsformen zu. Zwei davon sollen anhand der in den Zeichnungen dargestellten Figuren näher erläutert werden.

Es zeigt:
- Figur 1:: ein erstes Ausführungsbeispiel der erfindungsgemäßen Kolben-Zylinder-Anordnung,
- Figur 2:: ein zweites Ausführungsbeispiel der erfindungsgemäßen Kolben-Zylinder-Anordnung.

Gleiche Merkmale sind mit gleichen Bezugszeichen gekennzeichnet.

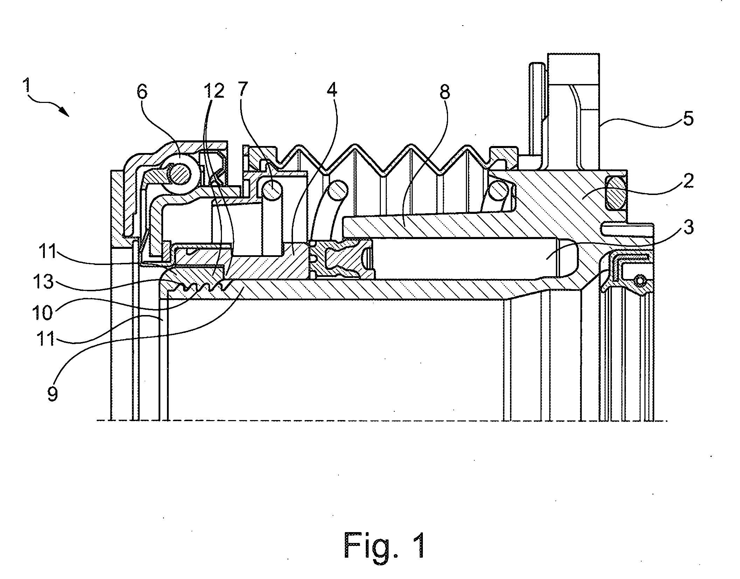

In Figur 1 ist ein erstes Ausführungsbeispiel des Nehmerzylinders 1 dargestellt, welcher in einem Doppelkupplungsgetriebe eingesetzt wird. Der Nehmerzylinder 1 besteht dabei aus einem aus Kunststoff bestehenden Zylindergehäuse 2, welches einen ringförmigen Druckraum 3 aufweist, in dem ein Kolben 4 axial bewegbar gelagert ist. Über einen nicht weiter dargestellten Anschlussstutzen des Zylindergehäuses 2 gelangt die Hydraulikflüssigkeit in den Druckraum 3 und führt zur Betätigung des Kolbens 4 und somit zur Betätigung eines Ausrücklagers 6.

Eine Vorlastfeder 7, welche gegen das Ausrücklager 6 vorgespannt ist, drückt gegen das Zylindergehäuse 2 im Bereich einer Befestigung 5 des Nehmerzylinders. Zur Bildung des Druckraumes 3 weist das Zylindergehäuse 2 eine Außenwandung 8 und eine als Führungshülse 9 bezeichnete Innenwandung auf. An der Führungshülse 9 ist ein Außengewiride 10 ausgebildet, auf welches eine Anschlagmutter 11 aufgeschraubt ist. Die Anschlagmutter 11 greift bei maximaler Extension des Kolbens 4 in einen Freischnitt 12 des Kolbens 4 ein, wodurch der Kolben 4 an einer weiteren axialen Bewegung gehindert wird. Der Freischnitt 12 kann vorzugsweise durch Material- bzw. Werkstoffänderungen verstärkt sein oder über eine Zweiteilung der Komponenten realisiert sein, wobei die Krafteinleitung an der Anschlagmutter 11 über höherfeste Komponenten realisiert ist.

Zwischen der Anschlagmutter 11 und dem Außengewinde 10 ist ein Schraubenkleber 13 angeordnet, der verhindert, dass sich die Anschlagmutter 11 von dem Außengewinde 10 während des Transports der Kupplungsbetätigungseinrichtung vom Hersteller zum Empfänger löst. Somit dient die Anschlagmutter 11 gleichzeitig als Transportsicherung.

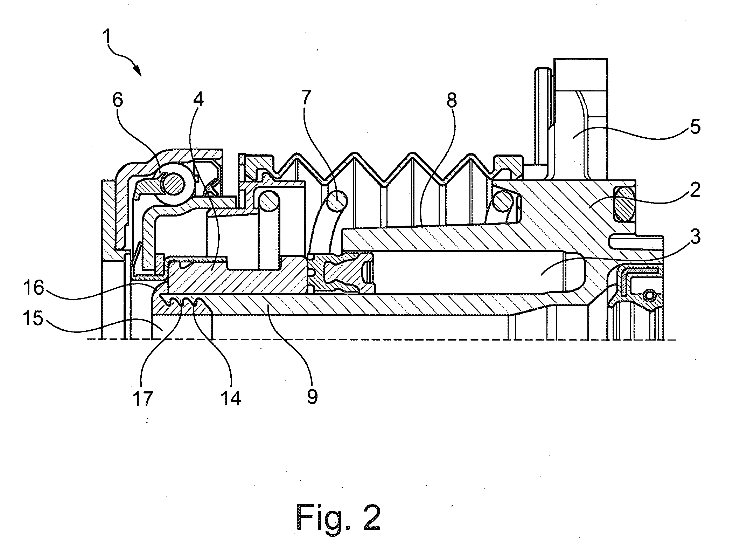

In Figur 2 ist ein zweites Ausführungsbeispiel des Nehmerzylinders 1 dargestellt, welches sich von dem ersten Ausführungsbeispiel lediglich durch die Ausgestaltung der Anschlagmutter und des Gewindes unterscheidet. Das Gewinde ist nun an der Führungshülse 9 als Innengewinde 14 ausgebildet, in welches die Anschlagmutter 15 eingeschraubt wird. Die Anschlagmutter 15 weist einen Überstand 16 auf, welcher das Ende der Führungshülse 9 umgreift und als Anschlag für die maximale Extension des Kolbens 4 dient. Auch hier ist ein Verkleben des Innengewindes 14 mit der Anschlagmutter 15 von Vorteil, um eine Rotationssicherung für die Anschlagmutter 15 zu erreichen.

Alternativ zum Einbringen des Schraubenklebers ist ein Heißverstemmen des Innengewindes 14 über zwei nicht weiter dargestellte zusätzliche Zapfen möglich, die in Richtung des Ausrücklagers 6 weisen. Neben den erläuterten Möglichkeiten wird eine Rotationssicherung der Anschlagmutter 15 auch durch ein Laserschweißen gewährleistet, mittels welchem die Anschlagmutter 15 zuverlässig mit der Führungshülse 9 verbunden wird und keine Rotation mehr ausführen kann. Diese alternativen Rotationssicherungen gelten auch für die in Verbindung mit Figur 1 dargestellte Anschlagmutter 11 und das Außengewinde 10. Darüber hinaus sind auch andere kraftschlüssige, formschlüssige oder stoffschlüssige Sicherungsmöglichkeiten denkbar

Die Flanken 17 der Gewindegänge sowohl des Außengewindes 10 als auch des Innengewindes 14 sind derart geformt, dass eine optimale Krafteinleitung in das Bauteil erfolgt, wenn das Gewinde mit axialer Last beaufschlagt wird.

Die Anschlagmuttern 11, 15 und die, das Gewinde 10, 14 tragende Führungshülse 9 sind in verschiedensten Werkstoffpaarungen ausbildbar. So sind Kunststoff-Kunststoff-Paarungen genauso zu realisieren wie Stahl- oder Aluminiumausbildungen für die Anschlagmutter 11, 15 in Verbindung mit einer Kunststoffausbildung für die das Gewinde 10, 14 tragende Führungshülse 9.

### Bezugszeichenliste

- 1: Nehmerzylinder
- 2: Zylindergehäuse
- 3: Druckraum
- 4: Kolben
- 5: Anschlussstutzen
- 6: Ausrücklager
- 7: Vorlastfeder
- 8: Außenwandung
- 9: Führungshülse
- 10: Außengewinde
- 11: Anschlagmutter
- 12: Freischnitt
- 13: Schraubenkleber
- 14: Innengewinde
- 15: Anschlagmutter
- 16: Überstand
- 17: Flanke

## Patentansprüche

1. Kolben-Zylinder-Anordnung, insbesondere ein Nehmerzylinder für eine hydraulische Kupplungsbetätigungseinrichtung, mit einem Ausrücklager und umfassend ein aus einem Kunststoff bestehendes Zylindergehäuse (2), in welchem ein ringförmiger Druckraum (3) ausgebildet ist, in dem ein Kolben (4) axial beweglich zur Betätigung des Ausrücklagers (6) gelagert ist, wobei die Innenwandung des Druckraumes (3) eine Führungshülse (9) bildet, wobei an der Führungshülse (9), dem Ausrücklager (6) zugewandt, ein Anschlag (10, 11; 14, 15) angeordnet ist, **dadurch gekennzeichnet, dass** der Anschlag als Schraubverbindung (10, 11; 14, 15) ausgebildet ist.

2. Kolben-Zylinder-Anordnung nach Anspruch 1, **dadurch gekennzeichnet; dass** die Schraubverbindung (10, 11; 14, 15) aus einem an der Führungshülse (9) ausgebildeten Gewinde (10, 14) besteht, auf welches eine Anschlagmutter (11, 15) aufgeschraubt ist.

3. Kolben-Zylinder-Anordnung nach Anspruch 2, **dadurch gekennzeichnet, dass** zwischen der Anschlagmutter (11, 15) und dem Gewinde (10, 14) ein Schraubenkleber (13) aufgebracht ist.

4. Kolben-Zylinder-Anordnung nach Anspruch 2, **dadurch gekennzeichnet, dass** die Anschlagmutter (11, 15) durch ein Heißverstemmen an der Führungshülse (9) gesichert ist.

5. Kolben-Zylinder-Anordnung nach Anspruch 2, **dadurch gekennzeichnet, dass** die Anschlagmutter (11, 15) durch ein Laserschweißen oder einen Formschluss mit einem elastischen Element an der Führungshülse (9) gesichert ist.

6. Kolben-Zylinder-Anordnung nach Anspruch 2, **dadurch gekennzeichnet, dass** das Gewinde (11) an einer zum Kolben (4) hinweisenden Seite der Führungshülse (9) ausgebildet ist.

7. Kolben-Zylinder-Anordnung nach Anspruch 6, **dadurch gekennzeichnet, dass** der Kolben (4) auf einer der Führungshülse (9) zugewandten Seite einen Freischnitt (12) aufweist, in welchen bei maximaler Extension des Kolbens (4) die Anschlagmutter (11) eingreift.

8. Kolben-Zylinder-Anordnung nach einem der Ansprüche 2 bis 7, **dadurch gekennzeichnet, dass** das Gewinde (14) an einer vom Kolben (4) weg weisenden Seite der Führungshülse (9) ausgebildet ist.

9. Kolben-Zylinder-Anordnung nach einem der Ansprüche 2 bis 8, **dadurch gekennzeichnet, dass** Flanken (17) des Gewindes (10, 14) in Kraftrichtung flach ansteigen.

10. Kolben-Zylinder-Anordnung nach einem der Ansprüche 2 bis 9, **dadurch gekennzeichnet, dass** die Anschlagmutter (11, 15) und das Gewinde (10, 14) aus einem Kunststoff gefertigt sind oder die Anschlagmutter (11, 15) aus einem Metall besteht.

## Claims

1. Piston-cylinder arrangement, in particular a slave cylinder for a hydraulic clutch actuating device, with a clutch release bearing, and comprising a cylinder housing (2) which is composed of a plastic and in which an annular pressure space (3) is formed, in which a piston (4) is mounted in an axially movable manner in order to actuate the clutch release bearing (6), wherein the inner wall of the pressure space (3) forms a guide sleeve (9), wherein a stop (10, 11; 14, 15) is arranged on the guide sleeve (9), facing the clutch release bearing (6), **characterized in that** the stop is designed as a screw connection (10, 11; 14, 15).

2. Piston-cylinder arrangement according to Claim 1, **characterized in that** the screw connection (10, 11; 14, 15) consists of a thread (10, 14) which is formed on the guide sleeve (9) and onto which a stop nut (11, 15) is screwed.

3. Piston-cylinder arrangement according to Claim 2, **characterized in that** a screw adhesive (13) is applied between the stop nut (11, 15) and the thread (10, 14).

4. Piston-cylinder arrangement according to Claim 2, **characterized in that** the stop nut (11, 15) is secured on the guide sleeve (9) by hot caulking.

5. Piston-cylinder arrangement according to Claim 2, **characterized in that** the stop nut (11, 15) is secured by laser welding or by a form-fitting connection with an elastic element on the guide sleeve (9).

6. Piston-cylinder arrangement according to Claim 2, **characterized in that** the thread (11) is formed on a side of the guide sleeve (9) that faces the piston (4).

7. Piston-cylinder arrangement according to Claim 6, **characterized in that** the piston (4), on a side facing the guide sleeve (9), has a clearance (12) in which the stop nut (11) engages upon maximum extension of the piston (4).

8. Piston-cylinder arrangement according to one of Claims 2 to 7, **characterized in that** the thread (14) is formed on a side of the guide sleeve (9) that faces away from the piston (4).

9. Piston-cylinder arrangement according to one of Claims 2 to 8, **characterized in that** flanks (17) of the thread (10, 14) have a shallow rise in the direction of force.

10. Piston-cylinder arrangement according to one of Claims 2 to 9, **characterized in that** the stop nut (11, 15) and the thread (10, 14) are manufactured from a plastic, or the stop nut (11, 15) is composed of a metal.

## Revendications

1. Ensemble piston-cylindre, en particulier cylindre récepteur pour un dispositif d'actionnement d'embrayage hydraulique, avec un palier de débrayage et comprenant un boîtier de cylindre (2) constitué de plastique, dans lequel est réalisé un espace de pression annulaire (3) dans lequel un piston (4) est supporté de manière déplaçable axialement pour actionner le palier de débrayage (6), la paroi interne de l'espace de pression (3) formant une douille de guidage (9), une butée (10, 11 ; 14, 15), tournée vers le palier de débrayage (6), étant disposée au niveau de la douille de guidage (9), **caractérisé en ce que** la butée est réalisée sous forme de connexion vissée (10, 11 ; 14, 15).

2. Ensemble piston-cylindre selon la revendication 1, **caractérisé en ce que** la connexion vissée (10, 11 ; 14, 15) se compose d'un filetage (10, 14) réalisé au niveau de la douille de guidage (9), sur lequel est vissé un écrou de butée (11, 15).

3. Ensemble piston-cylindre selon la revendication 2, **caractérisé en ce qu'**entre l'écrou de butée (11, 15) et le filetage (10, 14) est appliqué un adhésif pour vis (13).

4. Ensemble piston-cylindre selon la revendication 2, **caractérisé en ce que** l'écrou de butée (11, 15) est fixé à la douille de guidage (9) par un montage à chaud.

5. Ensemble piston-cylindre selon la revendication 2, **caractérisé en ce que** l'écrou de butée (11, 15) est fixé à la douille de guidage (9) par soudage au laser ou par un engagement par correspondance de formes avec un élément élastique.

6. Ensemble piston-cylindre selon la revendication 2, **caractérisé en ce que** le filetage (11) est réalisé au niveau d'un côté de la douille de guidage (9) tourné vers le piston (4).

7. Ensemble piston-cylindre selon la revendication 6, **caractérisé en ce que** le piston (4) présente, sur un côté tourné vers la douille de guidage (9), un évidement (12) dans lequel s'engage l'écrou de butée (11) lors d'une extension maximale du piston (4).

8. Ensemble piston-cylindre selon l'une quelconque des revendications 2 à 7, **caractérisé en ce que** le filetage (14) est réalisé au niveau d'un côté de la douille de guidage (9) tourné à l'opposé du piston (4).

9. Ensemble piston-cylindre selon l'une quelconque des revendications 2 à 8, **caractérisé en ce que** des flancs (17) du filetage (10, 14) montent à plat dans la direction de la force.

10. Ensemble piston-cylindre selon l'une quelconque des revendications 2 à 9, **caractérisé en ce que** l'écrou de butée (11, 15) et le filetage (10, 14) sont fabriqués en plastique ou l'écrou de butée (11, 15) se compose de métal.
